# EUROPEAN PATENT SPECIFICATION

(11) **EP 2 062 747 B1**
(45) Date of publication and mention of the grant of the patent: **19.01.2011**
(21) Application number: 08006139.3
(22) Date of filing: 28.03.2008
(51) Int. Cl.: B60B 21/02, B60B 21/10, B60B 21/12

(54) **Rim for a bicycle wheel and bicycle wheel comprising such a rim**
Radfelge für ein Fahrrad und Fahrrad mit einer derartigen Radfelge
Jante pour une roue de bicyclette et roue de bicyclette comprenant une telle jante

(30) Priority: 26.11.2007 IT MI20072232
(43) Date of publication of application: 27.05.2009
(73) Proprietor: CAMPAGNOLO S.r.l., 36100 Vicenza (VI) (IT)
(72) Inventor: Meggiolan, Mario, 36051 Creazzo (Vicenza) (IT)
(74) Representative: Castiglia, Paolo

(56) References cited:
- EP-A- 0 154 666
- EP-A- 0 893 280
- EP-A1- 0 615 865
- WO-A-2007/027927
- BE-A- 398 573
- CH-A- 179 922
- CH-A- 218 795
- DE-A1-102004 055 892
- DE-A1-102006 029 468
- GB-A- 2 009 662
- US-A1- 2004 095 014

## Description

The present invention relates to a rim for a bicycle wheel, in particular for a tubeless wheel.

The present invention also relates to a bicycle wheel comprising such a rim and a bicycle comprising such a wheel. Preferably, the aforementioned bicycle is a racing bicycle.

Typically, a bicycle wheel comprises a rim, on which a tyre, a hub and a plurality of spokes extending between the rim and the hub are mounted.

Amongst the various types of bicycle wheel the type known as "tubeless", i.e. without an air chamber, is now widespread. In particular, in tubeless wheels the tyre is mounted airtight on the rim, so as to form an airtight annular area in which there is pressurised air introduced through an inflation valve associated with the rim at a suitable hole formed in the rim.

The aforementioned airtight annular area of the tubeless wheels is defined by an inner surface of the tyre and by an outer surface of the rim. In particular, the rim comprises a body with a substantially annular extension having a radially outer portion provided with an annular bottom wall, or upper bridge of the rim, and a pair of annular side walls, or fins, extending radially outwards from the upper bridge. The fins hold the radially inner end edges, or beads, of the tyre, in a final assembled configuration of the tyre, against the thrust of the pressurised air, achieving the airtight coupling between tyre and rim.

The outer surface of the rim that delimits the airtight annular area is therefore defined by the radially outer surface of the upper bridge and by the axially inner surfaces of the fins.

The hole for the inflation valve is typically formed in an annular recess formed in a central annular portion of the upper bridge of the rim. The upper bridge preferably has no further holes. In particular, there are no holes for the assembly of the spokes of the wheel; such holes are, indeed, generally provided in a radially inner portion of the rim. In those cases in which the holes for the assembly of the spokes are, on the other hand, present in the upper bridge, they are suitably sealed through a sealing band, for example a rubber band, as described in US2004/0095014.

The annular recess formed in the upper bridge of the rim defines an annular channel for housing at least one of the beads of the tyre, preferably for both of the beads, in an initial assembly step of the tyre on the rim. In such a step, indeed, the beads of the tyre are housed in the annular recess so as to be pushed into contact with the side walls of such a recess. After this step, the tyre is inflated by feeding pressurised air into the chamber defined between the tyre and the upper bridge. In this step, the beads of the tyre slide on the upper bridge, through the effect of the pressurised air, until the fins of the rim are reached, with which they couple to hold the tyre against the thrust of the pressurised air in the final assembled configuration of the tyre.

In the inflation step of the tyre it is necessary to ensure the airtight between tyre and upper bridge during sliding of the beads of the tyre on the upper bridge. Such a step is therefore very delicate and, in order to be able to be carried out, requires feeding of air at high pressure.

US 6,257,676 discloses a rim for a tubeless wheel of the type described above. In particular, the annular recess formed in the upper bridge of this rim is defined by opposite flat side annular surfaces inclined with respect to the plane of longitudinal symmetry of the rim and connected with one another through an annular connecting surface that is also flat. The steps of assembly of the tyre onto the rim are described in detail.

Other types of rims for tubeless wheels are described in US 6,568,766. In particular, the annular recess formed in the upper bridge of these rims is defined by opposite curved side annular surfaces connected together through an annular connecting surface that is also curved. The side annular surfaces and the annular connecting surface have the same bending radius. The annular surfaces of the upper bridge arranged on axially opposite sides with respect to the annular recess are inclined by a predetermined angle with respect to an axis perpendicular to the plane of longitudinal symmetry of the rim.

Rims provided with an annular recess having opposed curved side annular surfaces are shown in EP 0 154 666, CH 179 922, CH 218 795 and BE 398 573, whereas rims provided with an annular recess having opposed flat side annular surfaces are shown in EP 0 893 280 and WO 2007/027927.

WO 2007/027927 discloses all the features of the preamble of claim 1.

The Applicant has devised a new type of rim having a different profile of the upper bridge to that of the rims described in the aforementioned documents of prior art, such a profile being suitable for a an easier and more effective assembly of the tyre onto the upper bridge of the rim during the inflation of the tyre in the initial assembly step of the tyre onto the rim than what occurs in rims of the prior art.

Therefore the present invention relates, in a first aspect thereof, to a rim for a bicycle wheel as recited in claim 1.

Throughout the present description and in the subsequent claims, the "annular bottom wall" of the radially outer portion of the rim of the present invention shall often also be indicated as "upper bridge". Moreover, in the present description and in the subsequent claims the terms "axially" or "axial" and "radially" o "radial" are used with reference respectively to directions substantially parallel to the rotation axis of the rim and to directions substantially perpendicular to the rotation axis of the rim. The term "circumferentially" or "circumferential", on the other hand, is used with reference to the direction of annular extension of the rim.

Advantageously, the provision on the upper bridge of the rim of the present invention of an annular recess provided with radially inner and outer surfaces having a different bending radius allows to select for such surfaces the most suitable bending radius value according to the material from which rim and tyre are made, thus optimising the geometry of the upper bridge depending on the different applications. In this way it is possible to always ensure easy and efficient assembly of the tyre on the rim and high reliability of the wheel in operation for all types of rims and tyres used.

In the rim of the present invention said radially outer surface is a curved surface, more preferably a convex surface, whereas said radially inner surface preferably comprises at least one curved surface portion, more preferably concave.

In the present description and in the subsequent claims, by "curved surface", be it concave or convex, we mean to generically indicate a not flat surface having a single bending radius or many bending radii.

Advantageously, the provision of curved surfaces makes it easier for the beads to slide from the base of the recess towards its top in the initial assembly step of the tyre.

Preferably, the rim of the present invention is symmetrical, and we shall often refer in the present description to such a type of rim when the advantages of the rim of the invention shall be highlighted. However, it should be understood that what is described is also valid in the case of an asymmetrical rim, such advantages in this case being achievable anyway, even if with reference to a single side of the rim.

Said out least one curved surface portion and said radially outer surface are radiused in a common tangent point. The path travelled by the beads of the tyre is therefore, as well as easy, gradual and without discontinuity.

Preferably, the bending radius of said radially outer surface is greater than that of said at least one curved portion of said radially inner surface.

Advantageously, the fact that the radially outer surfaces of the annular recess are made with a curved profile having a greater bending radius than that of the radially inner surface of the recess allows the variation in curvature of the profile of the upper bridge between its central annular portion and its side annular portions to be made more gradual and, therefore, allows the rising portion that the beads have to travel to come out from the annular recess and couple with the fins of the rim less steep. Basically, the sliding of the beads on the upper bridge of the rim is more uniform and continuous than what occurs in rims currently known. This allows the inflation of the tyre to be carried out by feeding air at a lower pressure than that used for the inflation of rims of the prior art, being advantageously even able to carry out such inflation with manual pumps. Moreover, the greater gradualness of the profile of the upper bridge of the rim of the present invention involves less stress on the beads of the tyre. The desired airtight during the sliding of the beads of the tyre on the upper bridge of the rim during the inflation of the tyre, and the correct coupling between beads of the tyre and fins of the rim at the end of the inflation of the tyre, are thus ensured in an easier and more effective way than in the rims of the prior art. After all, the assembly of the tyre on the rim of the present invention is made simpler and easier, as well as optimal in terms of efficiency and reliability.

The aforementioned advantages are particularly valuable in consideration of the fact that, in order to be able to house the beads in the annular recess in the initial assembly step of the tyre on the rim, it is necessary for the annular recess formed in the upper bridge of the rim to have a certain depth, such a depth being dictated by the size of the tyre. Indeed, if, for the same size of tyre, such a depth were less, it would be extremely difficult, once a portion of the bead is housed in the recess, to success to pass over the fin of the rim in order to also house in the recess the diametrically opposite portion of such a bead. Indeed, this would require an excessive deformation of the bead of the tyre, such a deformation however being possible up to a certain limit due to the intrinsic rigidity of the beads. Therefore, given that the annular recess of the upper bridge cannot have a depth below a certain value, the fact that a greater bending radius is provided for the radially outer surfaces of the annular recess than that of the radially inner surfaces advantageously allows to make easier the passing of the difference of level of the path that the beads have to travel during the initial assembly step of the tyre to move from the annular recess towards the fins of the rim.

The Applicant has found that the aforementioned advantages are particularly valuable in the case in which the bending radius of said radially outer surface is equal to about twice, with a possible approximation of a few tenths of a millimetre, that of said at least one curved portion of said radially inner surface.

In the rim of the present invention, said annular bottom wall comprises, between said radially outer surface and at least one of said side annular portions, a projecting surface. Advantageously, such a projecting surface avoids the beads of the tyre being able to accidentally move towards the recess of the upper bridge because of lateral knocks on the wheel, in which case an undesired air leakage may occur.

Such a projecting annular surface is defined by a curved surface. This makes it easier for the beads of the tyre to pass over said projecting surface during the initial assembly step of the tyre, making easier the sliding of the beads of the tyre from the side walls of the recess towards the fins of the rim.

Said radially outer surface and said projecting surface are radiused in a common tangent point. The path travelled by the beads of the tyre is thus gradual and without discontinuity even at the top of the recess.

Said side annular portions are substantially perpendicular to a plane of longitudinal symmetry of said rim. In this way the sliding of the beads of the tyre from the fins of the rim towards the recess of the upper bridge is further blocked in the case of lateral knocks on the wheel. Such sliding would indeed be made easier if such side annular portions were inclined towards the rotation axis of the rim as one moves axially from the fins towards the plane of longitudinal symmetry of the rim.

In a first embodiment of the rim of the present invention, the aforementioned radially inner surface of the recess is entirely defined by a curved surface having a single bending radius.

In an alternative embodiment of the rim of the present invention, the aforementioned radially inner surface of the recess is defined by a curved surface having many bending radii. In this case, preferably, the curved surface has a first bending radius at a radially inner portion thereof and a second bending radius at a radially outer portion thereof opposite to said central annular area.

Preferably, said second bending radius is smaller than said first bending radius.

Preferably, said at least one curved surface portion is defined at said radially outer annular portion.

In a further alternative embodiment of the rim of the present invention, said radially inner surface is defined by a substantially flat surface portion and by a curved surface portion. In this case, preferably, the flat surface portion is axially more inner than the curved surface portion.

In the rim of the present invention the central annular recess can have the same geometry along the entire annular extension of the rim.

In a particularly preferred embodiment of the rim of the present invention, the annular recess has a different geometry at the hole for the inflation valve. In this case, the annular recess comprises, at least on one side thereof and near to said hole, with reference to a cross section of the rim, a radially outer surface that is at least partially flat and a radially inner surface that is substantially flat.

Advantageously, such geometry of the upper bridge at the hole for the inflation valve allows a seat to be defined for housing the head of the inflation valve of the tyre. The aforementioned configuration allows the airtight coupling of the inflation valve in the respective hole provided in the rim to be ensured and allows the assembly operations of the valve onto the rim to be made easier. The inflation valve indeed typically comprises a stem adapted to pass through the hole formed in the upper bridge of the rim, and a widened head with respect to the stem. A ring nut is screwed into the stem and goes into abutment onto a radially inner surface of the rim, so as to hold the stem from sliding in a radially outer direction with respect to the rim. The screwing of the ring nut could cause the rotation of the head of the valve, a rotation that in the rim of the present invention, on the other hand, is prevented by the abutment of the head of the valve against the substantially flat inner surface of the recess.

Preferably, said radially outer surface comprises a flat surface portion adjacent to said radially inner surface and a curved surface portion arranged on the opposite side to said radially inner surface with respect to said flat surface portion. More preferably, said curved surface portion has the same bending radius as that of the radially outer surface of said recess at said area distal from said hole.

Advantageously, such geometry makes it possible to achieve the easy and effective airtight sliding of the beads of the tyre on the upper bridge in the initial assembly step of the tyre, the airtight housing of the inflation valve in the respective hole, and the simplification of the assembly operations of the valve on the rim.

In the preferred embodiment thereof, the rim of the present invention is a rim for a tubeless wheel, made from metallic material or from structural composite material, as defined below.

In a second aspect thereof, the present invention relates to a bicycle wheel comprising a rim of the type described above.

Preferably, such a wheel has, individually or in combination, all of the structural and functional characteristics discussed above with reference to the rim of the present invention and therefore has all of the aforementioned advantages.

In a third aspect thereof, the present invention relates to a bicycle comprising the aforementioned wheel.

Preferably, such a bicycle has, individually or in combination, all of the structural and functional characteristics discussed above with reference to the rim of the present invention and therefore has all of the aforementioned advantages.

Further characteristics and advantages of the present invention shall become clearer from the following detailed description of preferred embodiments thereof, made with reference to the attached drawings and given for indicating and not limiting purposes. In such drawings:
- figure 1 schematically shows a perspective view of a rim for a bicycle wheel in accordance with the present invention;
- figure 2 schematically shows a cross section of a first embodiment of the rim of figure 1 taken along the plane P1 in figure 1;
- figure 3 schematically shows an enlarged view of a radially outer portion of the rim of figure 2;
- figure 4 schematically shows an enlarged cross section view of a radially outer portion of a second embodiment of the rim of figure 1;
- figure 5 schematically shows an enlarged cross section view of a radially outer portion of a third embodiment of the rim of figure 1;
- figure 6 schematically shows an enlarged view of a portion of the rim of figure 1;
- figure 7 schematically shows an enlarged view of a radially outer portion of a cross section of the rim of figure 1, taken along the plane P2 in figure 6;
- figure 8 schematically shows an enlarged view of a radially outer portion of a cross section of the rim of figure 1, taken along the plane P3 in figure 6;
- figure 9 schematically shows a cross section of the rim of figure 1, taken along the plane P2 in figure 6, to which an inflation valve and a tyre in a final assembled configuration of the tyre onto the rim have been added;
- figure 10 schematically shows a cross section of an embodiment of a rim which is out the scope of present invention;
- figure 11 schematically shows a cross section of an alternative embodiment of a rim which is out the scope of the present invention.

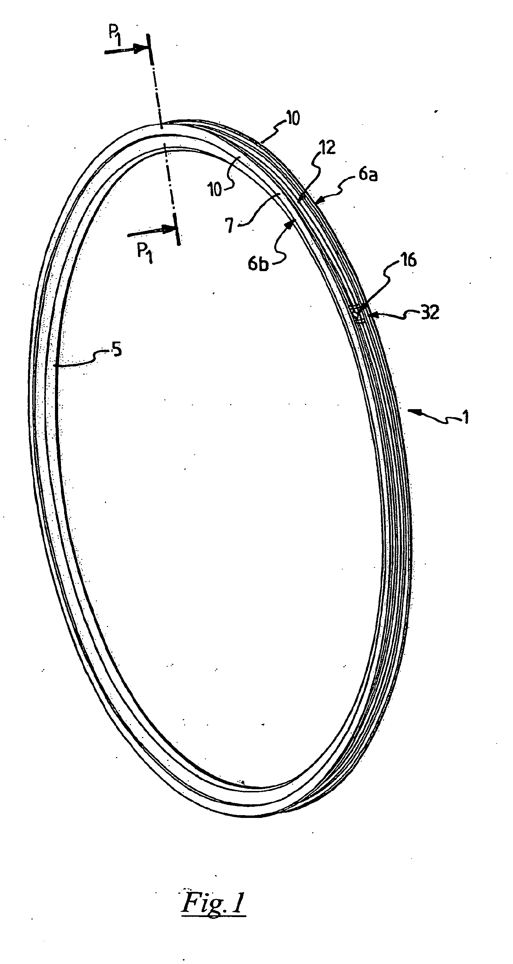

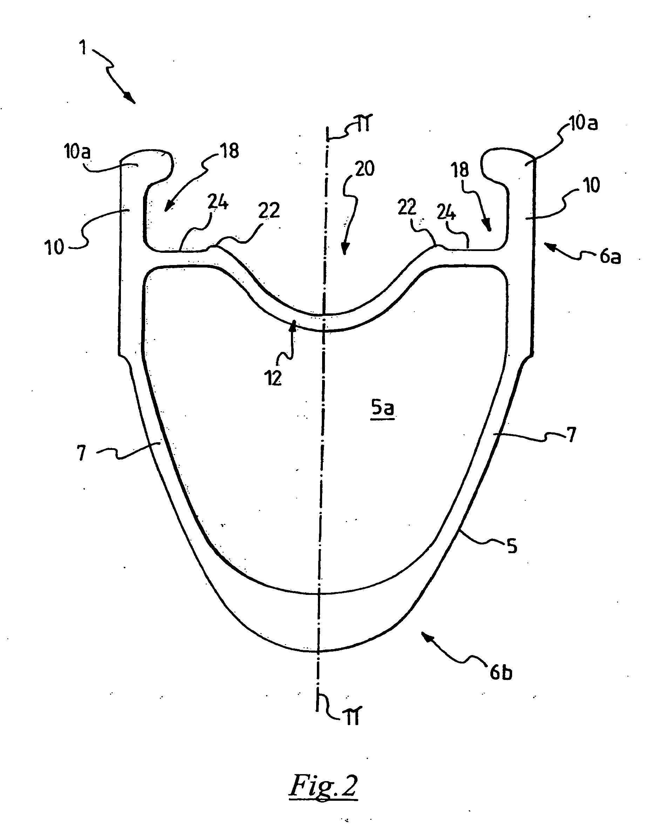

With initial reference to figures 1 and 2, a rim for a bicycle wheel in accordance with the present invention is indicated with 1. Such a rim is intended to be used in a tubeless wheel, preferably for a racing bicycle.

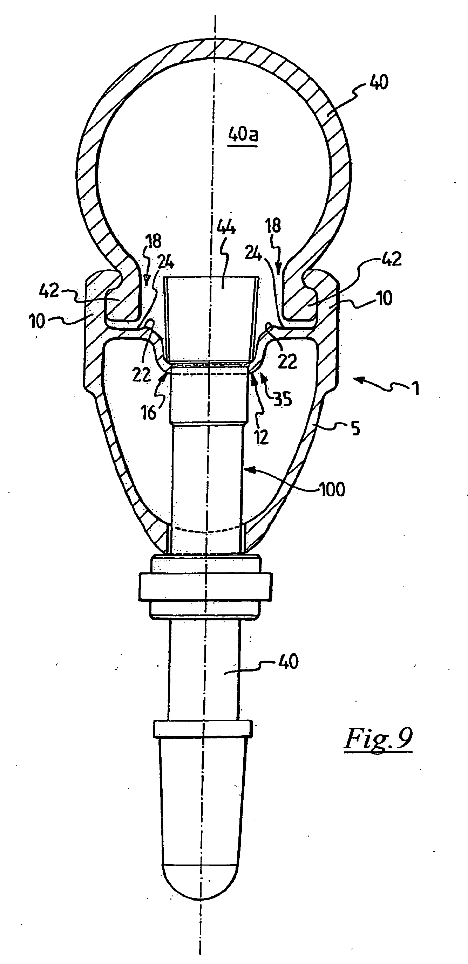

The rim 1 comprises a body 5 having a substantially annular extension. The body 5 is configured to house and hold, in a final assembled configuration of the tyre, radially inner end edges 42 of a tyre 40 (figure 9), in the jargon known as beads. The body 5 is also configured to make the assembly steps of the tyre 40 easier, as shall be made clear hereafter.

The body 5 comprises a radially outer portion 6a with which the tyre 40 is intended to be coupled and a radially inner portion 6b made in a single piece with the radially outer portion 6a. As shown in figure 1, and in greater detail in figure 2, the radially inner portion 6b is connected to the radially outer portion 6a through two side walls 7, thus forming a tubular structure 5a. The provision of the radially inner portion 6b in the rim 1 of the present invention is particularly advantageous since it offers easy fixing areas for the spokes of the wheel (in the figures attached hereto the holes for such spokes are not illustrated).

The radially outer portion 6a comprises an annular bottom wall 12, or upper bridge, and a pair of annular side walls 10, or fins, extending substantially in the radial direction outwards from the bottom wall 12. The side walls 10 in particular comprise a radially outer end portion 10a curved towards a plane of longitudinal symmetry π (illustrated in figure 2) of the rim 1.

The bottom wall 12 is totally without holes, with the exception of a hole 16 adapted to house an inflation valve 100 of the tyre 40 (figure 1, 6 and 9).

Figure 9 shows how the side walls 10 cooperate with the tyre 40 and with the bottom wall 12 to form an airtight chamber 40a between them. The annular side walls 10, and in particular the radially outer end portions 10a thereof, hold the tyre 40 in the final assembled configuration counteracting the thrust of the pressurised air on the tyre 40, thus generating an airtight coupling.

With reference to figures 1, 2 and 6, the body 5 has an identical geometry along the entire annular extension thereof, except in the area in which the hole 16 is provided, as shall be better described hereafter. In an alternative embodiment of the rim 1 of the present invention, the geometry of the body 5 is identical along the entire annular extension of the rim, the only discontinuity being defined by the hole 16.

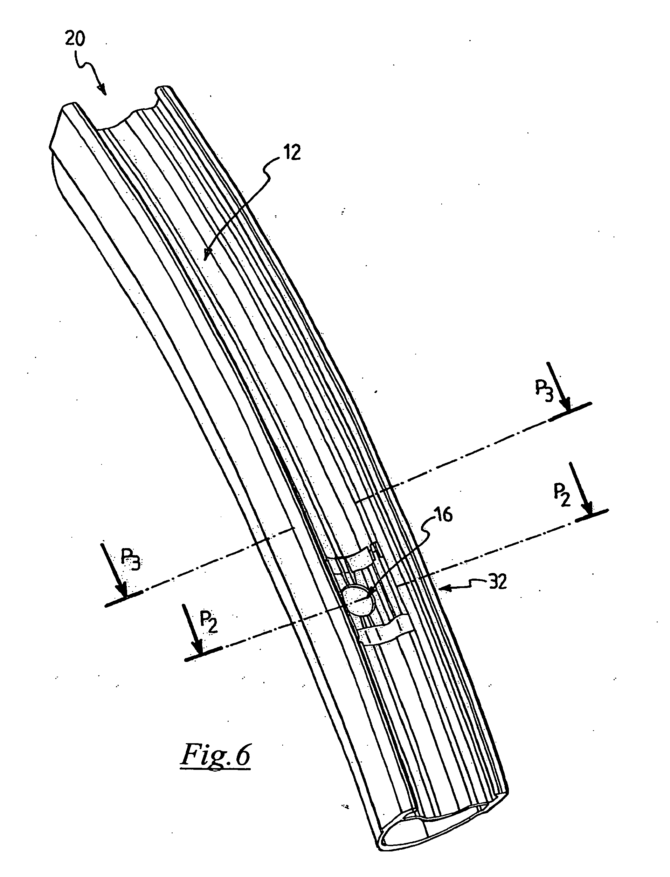

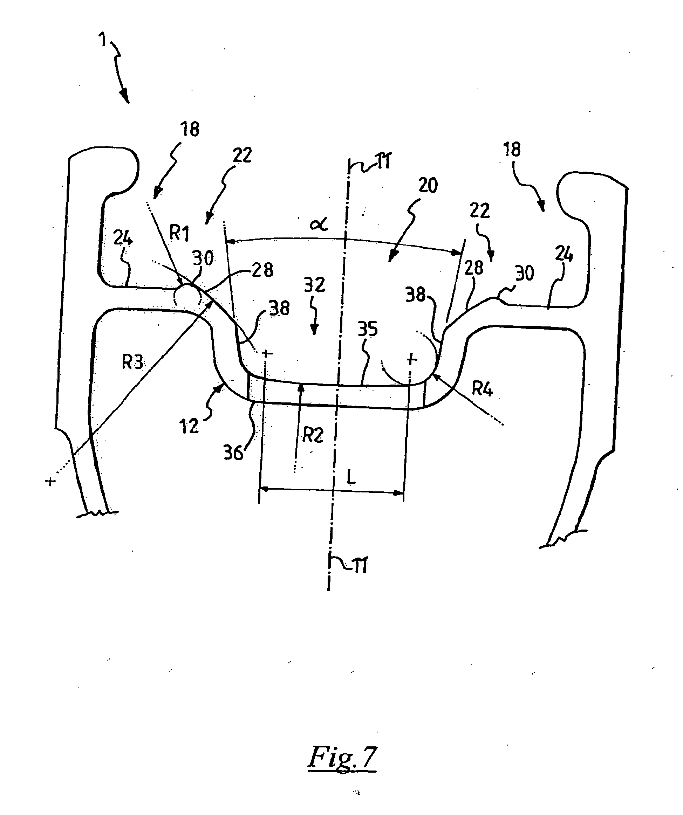

With reference to figure 2, the bottom wall 12 comprises, in a central portion thereof bridging the plane of longitudinal symmetry π of the rim, an annular recess 20. The hole 16 is formed substantially at the centre of the recess 20 (figure 6 and 7).

The recess 20 defines a channel in which, in an initial assembly step of the tyre 40, at least one of the beads 42 of the tyre is housed.

Again with reference to figure 2, the bottom wall 12 also comprises, on axially opposite sides with respect to the recess 20 and in a position adjacent to the two annular side walls 10, two side annular portions 24 substantially perpendicular to the plane of longitudinal symmetry π of the rim 1 and, between the annular recess 20 and each of the side annular portions 24, a projecting annular surface 22 having, in a transversal plane of the rim (like for example that of figure 2), a curved profile.

The projecting annular surface 22 has a larger outer radial size than the outer radial size of the side portions 24 of the bottom wall 12 of the rim 1.

As illustrated in figure 9, the side portions 24 of the bottom wall 12 and the side walls 10 of the rim 1 define two respective seats 18 for housing the two opposite beads 42 of the tyre 40, where they are arranged in a final assembled configuration of the tyre. In the assembly step of the tyre 40, the bead 42 positioned in the annular recess 20 must pass the projecting surface 22 to gain access to the respective seat 18.

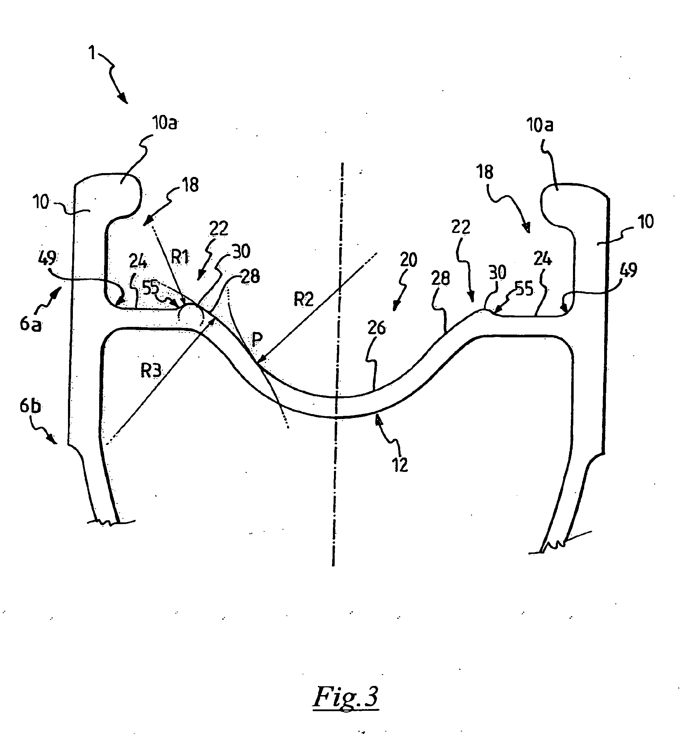

Hereafter, with reference to figure 3, a detailed description of a first embodiment of the rim of the present invention shall be given. In particular, the surfaces that define the annular bottom wall 12 shall be defined in detail, conventionally considering as concave, convex or flat surfaces those surfaces of revolution about the rotation axis of the rim respectively with a concave, convex or straight generatrix line in a cross section of the rim 1 made according to a radial plane passing through the aforementioned rotation axis, where the line is convex when the centre of curvature of such a line is on the side of the rotation axis of the rim whereas the line is concave when the centre of curvature is on the opposite side of the rotation axis of the rim.

Each side portion 24 of the bottom wall 12 comprises a radially outer flat surface orientated substantially perpendicular to the plane of longitudinal symmetry π of the rim, whereas each side wall 10 comprises an axially inner flat surface orientated substantially perpendicular to the rotation axis of the rim. The flat surfaces of the side portion 24 of the bottom wall 12 and of the side wall 10 are radiused through a respective curved surface 49. The aforementioned flat surfaces, together with the radially outer end portion 10a of the side walls 10, define the seats 18 for housing the beads 42 of the tyre 40.

Each projecting surface 22 is defined by a convex surface 30 with a bending radius R1 (in figure 3 a part of the circle of radius R1 is indicated with a thin line). Such a convex surface 30 is radiused to the flat surface of the respective side portion 24 of the bottom wall 12 through a concave joining surface 55 having a small bending radius.

The recess 20 of the bottom wall 12 is defined by a plurality of surfaces. In particular, it comprises two convex side surfaces 28 having a bending radius R3 connected together through a concave connecting surface 26 having a single bending radius R2 (in figure 3 part of the circles of radius R2 and R3 are indicated in a thin line). At one side of the recess 20 a radially inner concave surface 26 and a radially outer convex surface 28 can thus be identified.

The convex side surfaces 28 are directly radiused to the concave connecting surface 26, being tangent to each other in a point P.

The convex side surfaces 28 are also directly radiused to the convex surfaces 30.

The radius R3 is different to the radius R2. Preferably, the radius R3 is greater than the radius R2 and more preferably is equal to about twice the radius R2, with the approximation of a few tenths of a millimetre.

The radius R2 is preferably between 2 mm and 5.5 mm, whereas the radius R3 is preferably about twice the radius R2.

For example, in a particularly preferred embodiment of the rim illustrated in figure 3, the radius R2 is equal to about 4.2 mm, the radius R3 is equal to about 9 mm, the radius R1 is between 0.20 mm and 3 mm, preferably equal to about 0.5 mm, and the difference in level in the radial direction between the convex surface 30 and the flat surface of the respective side portion 24 of the bottom wall 12 is equal to about 0.35 mm.

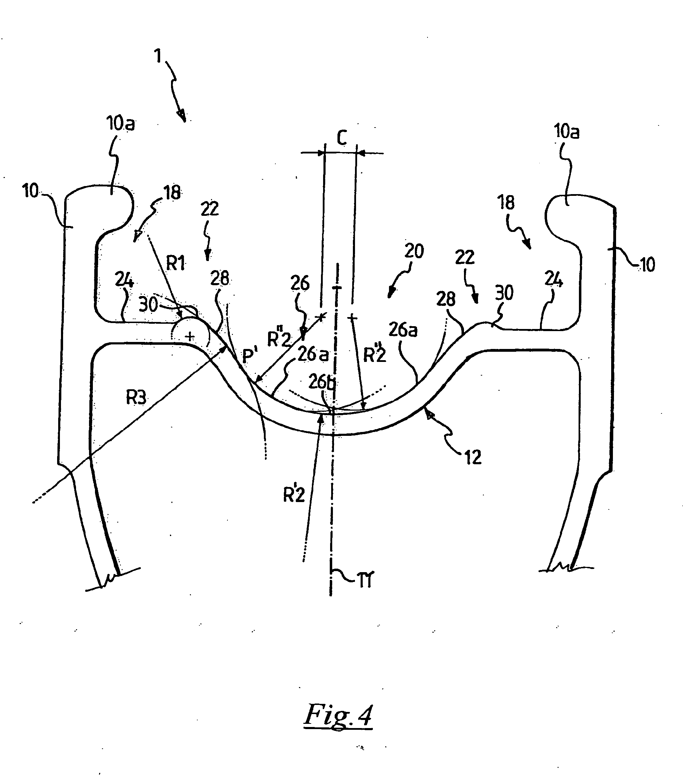

Figure 4 shows a second embodiment of the rim of the present invention.

In such a figure 4, structural elements that are identical or equivalent from the functional point of view to those of the rim described above with reference to figures 1-3 shall be indicated with the same reference numerals and they shall not be described any further.

The embodiment of figure 4 differs from that of figure 3 in that the connecting surface 26 is defined by surfaces having different bending radii. In particular, the connecting surface 26 comprises, in a central area 26b thereof bridging the axis of longitudinal symmetry π of the rim, a concave surface having a bending radius R'2 and, at the annular areas 26a thereof opposite the central area 26b, a concave surface having a bending radius R" 2 different to R'2, preferably lower than R'2.

In this case, the convex side surfaces 28 are directly radiused to the concave surfaces of the annular areas 26a, being tangent in a point P'.

In a particularly preferred embodiment of the rim illustrated in figure 4, the radius R'2 is equal to about 4.75 mm, the radius R"2 is equal to about 3.5 mm, the radius R3 is equal to about 7 mm, the radius R1 is equal to about 0.75 mm and the difference in level in the radial direction between the convex surface 30 and the flat surface of the respective side portion 24 of the bottom wall 12 is equal to about 0.35 mm. The portion with radius R'2 extends in the axial direction along an arc of circumference having a cord C of a length equal to about 1.1 mm.

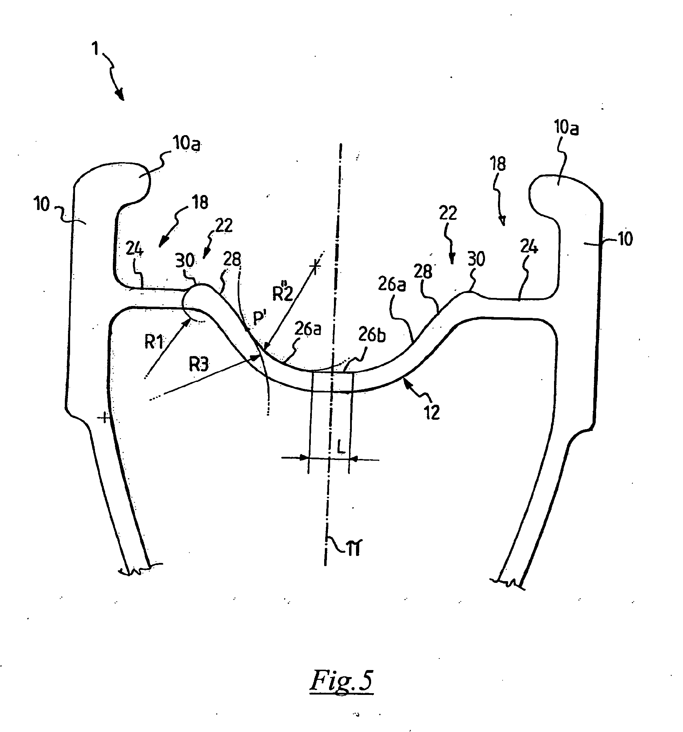

Figure 5 shows a third embodiment of the rim of the present invention.

In such a figure 5, structural elements that are identical or equivalent from the functional point of view to those of the rim described above with reference to figures 1-4 shall be indicated with the same reference numerals and they shall not be described any further.

The embodiment of figure 5 differs from that of figure 4 in that the connecting surface 26 is defined, at the central area 26b thereof bridging the axis of longitudinal symmetry π of the rim, by a flat surface or a concave surface having a very large bending radius, such as to define a substantially flat surface. Such a surface is radiused to the concave surfaces with bending radius R"2 of the annular areas 26a opposite the central area 26b.

In a particularly preferred embodiment of the rim illustrated in figure 5, the radius R"2 is equal to about 3.5 mm, the radius R3 is equal to about 7 mm, the radius R1 is equal to about 1.5 mm and the difference in level in the radial direction between the convex surface 30 and the flat surface of the respective side portion 24 of the bottom wall 12 is equal to about 0.35 mm. The flat surface of the central area 26b extends in the axial direction for a portion L of a length equal to about 1.1 mm.

In a further embodiment (not illustrated) of the rim of the present invention, the connecting surface is flat (and therefore has an infinite bending radius). It is possible to foresee further embodiments in which the value of the bending radius R2 is anything from 2 to infinite.

As already stated, in the preferred embodiment thereof, the rim 1 has an identical geometry along its entire annular extension, except at the hole 16 and in an area proximal to such a hole 16.

Figure 7 shows a cross section of the rim 1 at the hole 16. In such an area of the rim 1, the bottom wall 12 of the rim 1 is shaped so as to form a seat 32 (figure 6 and 7) for the head of the inflation valve of the tyre. In figure 7, structural elements that are identical or equivalent from the functional point of view to those of the rim described above with reference to figures 1-6 shall be indicated with the same reference numerals and they shall not be described any further.

As shown in figure 7, at the hole 16 the recess 20 comprises two flat side surfaces 38 inclined by a predetermined angle α with respect to the plane of longitudinal symmetry of the rim 1. The two side surfaces 38 are connected by a substantially flat connecting surface 36 or a concave surface having a very large bending radius R2, such as to define a substantially flat surface. The two flat surfaces 38 are radiused with the connecting surface 36 through a surface having a bending radius R4. The two flat surfaces 38 define, with the connecting surface 36, the seat 32 for housing the head of the inflation valve of the tyre.

In a radially outer position with respect to the flat surfaces 38, i.e. on the opposite side of the connecting surface 36 with respect to the flat surfaces 38, the recess 20 comprises two convex side surfaces 28 having a bending radius R3, in a way totally identical to what has been described above with reference to figures 3-5. The bottom wall 12 also comprises, in an axially outer position with respect to the recess 20, two convex projecting surfaces 29 having a bending radius R1 and two side portions 24 having flat surfaces, in a way totally identical to what has been described above with reference to figures 3-5.

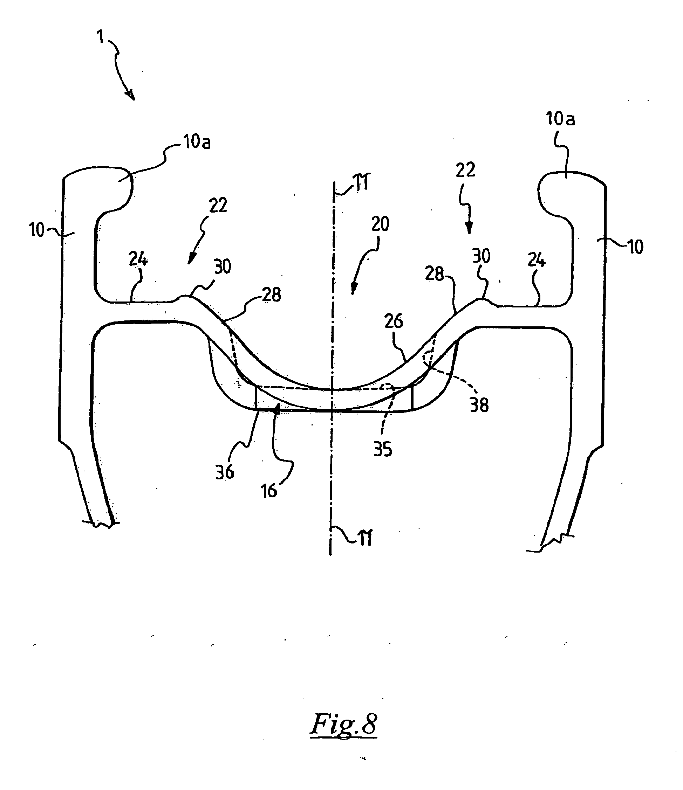

Preferably, therefore, moving in the radial direction outwards from the radially outer end of the flat surfaces 38, the rim 1 of the present invention has the same geometry along the entire annular extension thereof, even at the hole 16 and at the area proximal to the hole 16, such a geometry being different only in the radially inner area of the recess 20 with respect to the convex side surfaces 28. Figure 8, which is a section of the rim 1 according to the radial plane P3 of figure 6, shows the difference in geometry of the bottom wall 12, and in particular of the annular recess 20 formed in the bottom wall 12, between an area of the rim in which the hole 16 is not present and the area of the rim in which the hole 16 is formed. It should be noted how, at the hole 16, the base of the recess 20 is longer in the axial direction with respect to the areas of the rim 1 that are not at the hole 16.

In particularly preferred embodiments of the rim of the present invention, at the hole 16 the connecting surface 36 has a bending radius R2 equal to about 35 mm and a length L in the axial direction equal to about 53 mm (the surface 36 is thus substantially flat). In such embodiments, the angle of inclination a is equal to about 18°, the radius R4 is equal to about 1 mm, the radius R3 is equal to about 9 mm or alternatively 7 mm (depending on the size of the recess 20 in the areas of the rim distal from the hole 16), the radius R1 is equal to about 0.5 mm, or alternatively 0.75 mm or alternatively again 1.5 mm (depending on the size of the recess 20 in the areas of the rim distal from the hole 16) and the difference in level in the radial direction between the convex surface 30 and the flat surface of the respective side portion 24 of the bottom wall 12 is equal to about 0.35 mm.

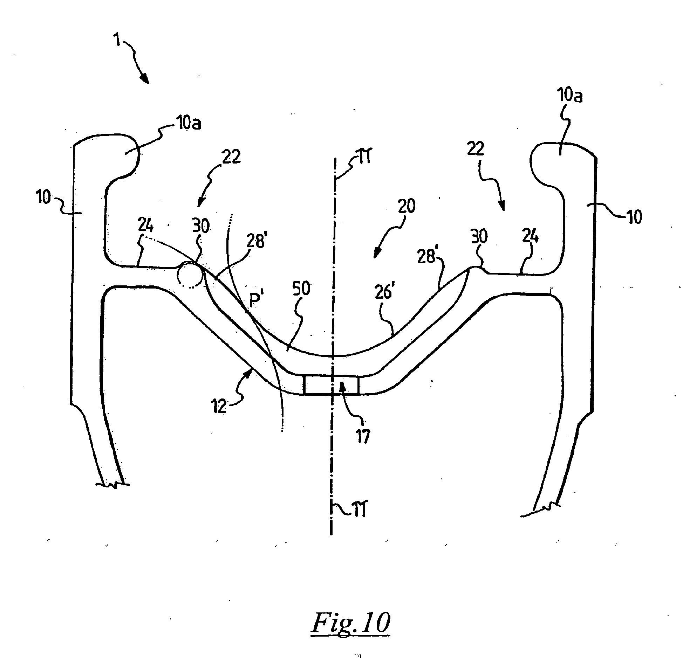

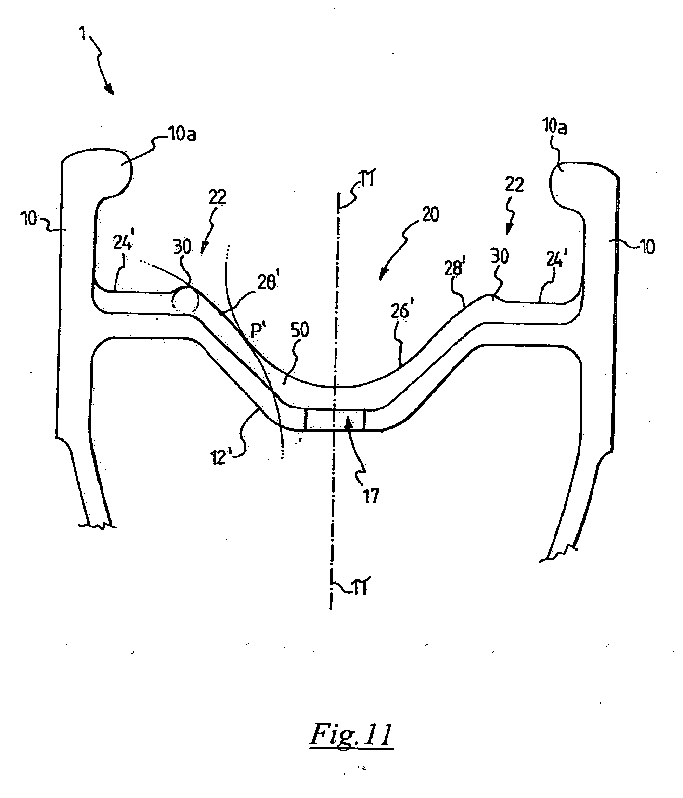

Figures 10 and 11 show alternative embodiments of a rim which is out the scope of the present invention. In such figures, structural elements that are identical or equivalent from the structural and functional point of view to those of the rim described above with reference to figures 1-9 shall be indicated with the same reference numerals and they shall not be described any further.

Such a rim differs from the one described above and illustrated in figures 1 to 9 for the different profile in cross section of the bottom wall 12 and for the arrangement on the upper bridge 12 of a band 50.

As illustrated, the upper bridge 12 comprises, in addition to the inflation hole 16 (not visible in figure 10), further holes 17 for the assembly of spokes of the wheel. The holes 17 are spaced apart on the bottom wall 12 - and from the hole 16 - in the circumferential direction.

The band 50 is of the type described in US2004/0095014, but differs from it for its radially outer profile, with reference to a cross section of the band. In particular, the band 50 has an identical profile to that of the radially outer surface of the recess 20 of the rim described previously with reference to figure 3.

More specifically, the outer surface of the band 50 comprises a concave radially inner surface 26' and two opposite convex radially outer surfaces 28' totally identical to the surfaces 26 and 28 described with reference to figure 3. Such surfaces are radiused together (in a single tangent point P') and to the concave surfaces 30 of the projecting surfaces 22 in a totally identical way to what has been described above with reference to figure 3.

Of course, the profile of the band 50 can also be different from the one illustrated in figure 10. For example, such a profile can be any of those described above with reference to the other embodiments that have or have not been illustrated, or it can be identical to that of the radially outer surface of the entire bottom wall 12 of the rim described previously with reference to figure 3. In this last case therefore, as illustrated in figure 11, the band 50 also comprises two flat side portions 24', and two projecting surfaces 22, having an outer profile totally identical to that of the side potions 24 and of the projecting surfaces 22 of the upper bridge 12 of the rim described previously with reference to figure 3.

In any case, in the embodiments of the rim in which the band 50 is used, the profile of the recess 20 of the upper bridge 12' of the rim does not have particular innovative characteristics, the particular desired shape of the recess 20 indeed being obtained upon application of the band 50 onto the bottom wall 12'.

The rim 1 of the present invention can be made from any material, for example metal, like an aluminium alloy. In combination with or as an alternative to the metallic material it is possible to use a structural composite material.

By composite material we mean a material consisting of at least two components including a polymeric matrix and a filler for example comprising structural fibres, granules or powders. The structural fibres are preferably selected from the group consisting of carbon fibres, glass fibres, aramid fibres, ceramic fibres, boron fibres and combinations thereof. Carbon fibres are particularly preferred. Preferably, the polymeric material is thermosetting and preferably comprises an epoxy resin. However, the possibility of using a thermoplastic material is not excluded.

By structural composite materials we mean those materials that contain structural fibres with a length of over five millimetres. The arrangement of said structural fibres in the polymeric material can be a random arrangement of pieces or sheets of structural fibres, a substantially unidirectional ordered arrangement of fibres, a substantially bi-directional ordered arrangement of fibres or a combination of the above.

In the case in which the band 50 is used, such a band is preferably made from polymeric material, more preferably polypropylene, possibly reinforced with a polyester fabric.

Obviously, a man skilled in the art can bring numerous modifications and variants to the rim described above, in order to satisfy specific and contingent requirements, all of which are moreover comprised within the scope of protection of the present invention as defined by the following claims.

## Claims

1. Rim (1) for a bicycle wheel comprising a body (5) with a substantially annular extension having a radially outer portion (6a) shaped for coupling with a tyre (40), said radially outer portion (6a) comprising an annular bottom wall (12) provided with a hole (16) for an inflation valve (100) and a pair of annular side walls (10) extending substantially in the radial direction outwards from the bottom wall (12), each annular side wall (10) comprising a radially outer edge portion (10a) curved towards a plane of longitudinal symmetry (n) of said rim (1), said annular bottom wall (12) comprising a central annular recess (20) and two side annular portions (24) arranged on axially opposite sides with respect to said central annular recess (20) and substantially perpendicular to the plane of longitudinal symmetry (n) of said rim (1), said recess (20) comprising, at least on one side thereof and at least in an area circumferentially distal from said hole (16), with reference to a cross section of the rim (1), a radially inner surface (26) and a radially outer surface (28), wherein said annular bottom wall (12) comprises, between said radially outer surface (28) and at least one of said side annular portions (24), a projecting surface (22) defined by a curved surface (30), **characterised in that** said radially outer surface (28) has a bending radius (R3) different to that of said radially inner surface (26), said radially outer surface (28) being a convex surface and said radially inner surface (26) comprising at least one portion of concave surface (26a, 26b), wherein said at least one portion of concave surface (26a) and said radially outer surface (28) are radiused in a common tangent point (P) and wherein said radially outer surface (28) and said projecting surface (22) are radiused in a common tangent point.

2. Rim (1) according to claim 1, wherein the bending radius (R3) of said radially outer surface (28) is greater than that of said at least one curved portion (26a) of said radially inner surface (26).

3. Rim (1) according to claim 2, wherein the bending radius (R3) of said radially outer surface (28) is equal to about twice that of said at least one curved portion (26a) of said radially inner surface (26).

4. Rim (1) according to any one of the previous claims, wherein said radially inner surface (26) is entirely defined by a curved surface.

5. Rim (1) according to claim 4, wherein said curved surface has a single bending radius (R2).

6. Rim (1) according to claim 4, wherein said curved surface has a first bending radius (R'2) at a radially inner portion (26b) thereof and a second bending radius (R"2) at a radially outer portion (26a) thereof.

7. Rim (1) according to claim 6, wherein said second bending radius (R"2) is smaller than said first bending radius (R'2).

8. Rim (1) according to claim 6 or 7, wherein said at least one portion of curved surface is defined at said radially outer portion (26a).

9. Rim (1) according to claim 1, wherein said radially inner surface (26) is defined by a substantially flat surface portion (26b) and a curved surface portion (26a).

10. Rim (1) according to claim 9, wherein said flat surface portion (26b) is axially more inner than said curved surface portion (26a).

11. Rim (1) according to any one of the previous claims, wherein said central annular recess (20) has the same geometry along the entire annular extension of said rim (1).

12. Rim (1) according to any one of claims 1 to 10, wherein said recess (20) comprises, at least on a side thereof and near to said hole (16), with reference to a cross section of the rim (1), an at least partially flat radially outer surface (38) and a substantially flat radially inner surface (36).

13. Rim (1) according to claim 12, wherein said radially outer surface (38) comprises a flat surface portion adjacent to said radially inner surface (36) and a curved surface portion arranged on the opposite side to said radially inner surface (36) with respect to said flat surface portion.

14. Rim (1) according to claim 13, wherein said curved surface portion has the same bending radius (R3) as that of the radially outer surface (28) of said recess (20) at said area distal from said hole (16).

15. Rim (1) according to any one of the previous claims, wherein said rim (1) is a rim for a tubeless wheel.

16. Rim (1) according to any one of the previous claims, wherein said rim (1) is made from metallic material.

17. Rim (1) according to any one of claims 1 to 15, wherein said rim (1) is made from structural composite material.

18. Bicycle wheel comprising a rim (1) according to any one of the previous claims.

19. Bicycle comprising a wheel according to claim 18.

## Patentansprüche

1. Felge (1) für ein Rad eines Fahrrads, die einen Körper (5) mit einer im Wesentlichen ringförmigen Verlängerung umfasst, die einen radial außenliegenden Abschnitt (6a) aufweist, der für Verbindung mit einem Reifen (40) geformt ist, wobei der radial außenliegende Abschnitt (6a) eine ringförmige Bodenwand (12), die mit einem Loch (6) für ein Aufpumpventil (100) versehen ist, und ein Paar ringförmiger Seitenwände (10) umfasst, die sich im Wesentlichen in der radialen Richtung von der Bodenwand (12) nach außen erstrecken, wobei jede ringförmige Seitenwand (10) einen radial außenliegenden Randabschnitt (10a) umfasst, der zu einer Ebene der Längssymmetrie (π) der Felde (1) hin gekrümmt ist, die ringförmige Bodenwand (12) eine mittige ringförmige Vertiefung (200) sowie zwei seitliche ringförmige Abschnitte (24) umfasst, die einander in Bezug auf die mittige ringförmige Vertiefung (20) axial gegenüberliegenden Seiten und im Wesentlichen senkrecht zu der Ebene der Längssymmetrie (π) der Felge (1) sind, wobei die Vertiefung (20) wenigstens an einer Seite derselben und wenigstens in einem Bereich, der in Umfangsrichtung von dem Loch (16) entfernt ist, in Bezug auf einen Querschnitt der Felge (1) eine radial innenliegende Fläche (26) und eine radial außenliegende Fläche (28) umfasst, wobei die ringförmige Bodenwand (12) zwischen der radial außenliegenden Fläche (28) und wenigstens einem der seitlichen ringförmigen Abschnitte (24) eine vorstehende Fläche (22) umfasst, die durch eine gekrümmte Fläche (30) gebildet wird, **dadurch gekennzeichnet, dass** die radial außenliegende Fläche (28) einen Biegeradius (R3) hat, der sich von dem der radial innenliegenden Fläche (26) unterscheidet, die radial außenliegende Fläche (28) eine konvexe Fläche ist und die radial innenliegende Fläche (26) wenigstens einen Abschnitt einer konkaven Fläche (26a, 26b) umfasst, wobei der wenigstens eine Abschnitt der konkaven Fläche (26a) und die radial außenliegende Fläche (28) in einem gemeinsamen Tangentenpunkt (P) gerundet sind und die radial außenliegende Fläche (28) sowie die vorstehende Fläche (22) in einem gemeinsamen Tangentenpunkt gerundet sind.

2. Felge (1) nach Anspruch 1, wobei der Biegeradius (R3) der radial außenliegenden Fläche (28) größer ist als der des wenigstens einen gekrümmten Abschnitts (26a) der radial innenliegenden Fläche (26).

3. Felge (1) nach Anspruch 2, wobei der Biegeradius (R3) der radial außenliegenden Fläche (28) ungefähr zweimal so groß ist wie der des wenigstens einen gekrümmten Abschnitts (26a) der radial innenliegenden Fläche (26).

4. Felge (1) nach einem der vorangehenden Ansprüche, wobei die radial innenliegende Fläche (26) vollständig durch eine gekrümmte Fläche gebildet wird.

5. Felge (1) nach Anspruch 4, wobei die gekrümmte Fläche einen einzelnen Biegeradius (R2) hat.

6. Felge (1) nach Anspruch 4, wobei die gekrümmte Fläche einen ersten Biegeradius (R'2) an einem radial innenliegenden Abschnitt (26b) derselben und einen zweiten Biegeradius (R"2) an einem radial außenliegenden Abschnitt (26a) derselben hat.

7. Felge (1) nach Anspruch 6, wobei der zweite Biegeradius (R"2) kleiner ist als der erste Biegeradius (R'2).

8. Felge (1) nach Anspruch 6 oder 7, wobei der wenigstens eine Abschnitt der gekrümmten Fläche an dem radial außenliegenden Abschnitt (26a) ausgebildet ist.

9. Felge (1) nach Anspruch 1, wobei die radial innenliegende Fläche (26) durch einen im Wesentlichen planen Flächenabschnitt (26b) und einen gekrümmten Flächenabschnitt (26a) gebildet wird.

10. Felge (1) nach Anspruch 9, wobei der plane Flächenabschnitt (26b) axial weiter innen liegt als der gekrümmte Flächenabschnitt (26a).

11. Felge (1) nach einem der vorangehenden Ansprüche, wobei die mittige ringförmige Vertiefung (20) entlang der gesamten ringförmigen Ausdehnung der Felge (1) die gleiche Form hat.

12. Felge (1) nach einem der Ansprüche 1 bis 10, wobei die Vertiefung (20) an wenigstens einer Seite derselben und in der Nähe des Lochs (16) in Bezug auf einen Querschnitt der Felge (1) eine wenigstens teilweise plane, radial außenliegende Fläche (38) sowie eine im Wesentlichen plane, radial innenliegende Fläche (36) umfasst.

13. Felge (1) nach Anspruch 12, wobei die radial außenliegende Fläche (38) einen planen Flächenabschnitt, der an die radial innenliegende Fläche (36) angrenzt, und einen gekrummten Flächenabschnitt umfasst, der an der in Bezug auf den planen Flächenabschnitt der radial innenliegenden Fläche (36) gegenüberliegenden Seite angeordnet ist.

14. Felge (1) nach Anspruch 13, wobei der gekrümmte Flächenabschnitt den gleichen Biegeradius (R3) wie der der radial außenliegender Fläche (28) der Vertiefung (20) an dem von dem Loch (16) entfernten Bereich hat.

15. Felge (1) nach einem der vorangehenden Ansprüche, wobei die Felge (1) eine Felge für ein schlauchloses Rad ist.

16. Felge (1) nach einem der vorangehenden Ansprüche, wobei die Felge (1) aus Metallmaterial besteht.

17. Felge (1) nach einem der Ansprüche 1 bis 15, wobei die Felge (1) aus strukturellem Verbundmaterial besteht.

18. Rad für ein Fahrrad, das eine Felge (1) nach einem der vorangehenden Ansprüche umfasst.

19. Fahrrad, das ein Rad nach Anspruch 18 umfasst.

## Revendications

1. Jante (1) pour une roue de bicyclette, comprenant un corps (5) s'étendant sensiblement annulairement et possédant une partie radialement extérieure (6a) conformée pour son accouplement avec un pneumatique (40), ladite partie radialement extérieure (6a) comprenant une paroi de fond annulaire (12) pourvue d'un orifice (16) pour une valve de gonflage (100) et une paire de parois latérales annulaires (10) s'étendant sensiblement radialement vers l'extérieur depuis la paroi de fond (12), chaque paroi latérale annulaire (10) comprenant une partie de bord radialement extérieure (10a) incurvée vers un plan de symétrie longitudinale (π) de ladite jante (1), ladite paroi de fond annulaire (12) comprenant un évidement annulaire central (20) et deux parties annulaires latérales (24), disposées sur des côtés axialement opposés par rapport audit évidement annulaire central (20) et sensiblement perpendiculaires au plan de symétrie longitudinale (π) de ladite jante (1), ledit évidement (20) comprenant, au moins sur un côté de celui-ci et au moins dans une zone circonférentiellement distale par rapport audit orifice (16), en référence à une section transversale de la jante (1), une surface radialement intérieure (26) et une surface radialement extérieure (28), sachant que ladite paroi de fond annulaire (12) comprend, entre ladite surface radialement extérieure (28) et au moins une des parties annulaires latérales (24), une surface en saillie (22) définie par une surface incurvée (30), **caractérisée en ce que** la surface radialement extérieure (28) possède un rayon de courbure (R3) différent de celui de ladite surface radialement intérieure (26), la surface radialement extérieure (28) étant une surface convexe et ladite surface radialement intérieure (26) comprenant au moins une partie de surface concave (26a, 26b), sachant que ladite au moins une partie de surface concave (26a) et ladite surface radialement extérieure (28) sont arrondies en un point tangent commun (P), et que ladite surface radialement extérieure (28) et ladite surface en saillie (22) sont arrondies en un point tangent commun.

2. Jante (1) selon la revendication 1, **caractérisée en ce que** le rayon de courbure (R3) de ladite surface radialement extérieure (28) est plus grand que celui de ladite au moins une partie incurvée (26a) de ladite surface radialement intérieure (26).

3. Jante (1) selon la revendication 2, **caractérisée en ce que** le rayon de courbure (R3) de ladite surface radialement extérieure (28) est égal à environ deux fois celui de ladite au moins une partie incurvée (26a) de ladite surface radialement intérieure (26).

4. Jante (1) selon l'une quelconque des revendications précédentes, **caractérisée en ce que** la surface radialement intérieure (26) est entièrement définie par une surface incurvée.

5. Jante (1) selon la revendication 4, **caractérisée en ce que** ladite surface incurvée possède un seul rayon de courbure (R2).

6. Jante (1) selon la revendication 4, **caractérisée en ce que** ladite surface incurvée possède un premier rayon de courbure (R'2) sur une partie radialement intérieure (26b), et un second rayon de courbure (R"2) sur une partie radialement extérieure (26a).

7. Jante (1) selon la revendication 6, **caractérisée en ce que** ledit second rayon de courbure (R"2) est plus petit que le premier rayon de courbure (R'2).

8. Jante (1) selon la revendication 6 ou 7, **caractérisée en ce que** ladite au moins une partie de surface incurvée est définie sur ladite partie radialement extérieure (26a).

9. Jante (1) selon la revendication 1, **caractérisée en ce que** ladite surface radialement intérieure (26) est définie par une partie de surface sensiblement plate (26b) et une partie de surface incurvée (26a).

10. Jante (1) selon la revendication 9, **caractérisée en ce que** ladite partie de surface plate (26b) se situe axialement plus à l'intérieur que la partie de surface incurvée (26a).

11. Jante (1) selon l'une quelconque des revendications précédentes, **caractérisée en ce que** ledit évidement annulaire central (20) possède la même géométrie sur toute l'étendue annulaire de la jante (1).

12. Jante (1) selon l'une quelconque des revendications 1 à 10, **caractérisée en ce que** ledit évidement (20) comprend, au moins sur un côté et à proximité dudit orifice (16), en référence à une section transversale de la jante (1), une surface radialement extérieure (38) au moins partiellement plate et une surface radialement intérieure (36) sensiblement plate.

13. Jante (1) selon la revendication 12, **caractérisée en ce que** la surface radialement extérieure (38) comprend une partie de surface plate adjacente à ladite surface radialement intérieure (36), et une partie de surface incurvée disposée, sur le côté opposé de la surface radialement intérieure (36) par rapport à ladite partie de surface plate.

14. Jante (1) selon la revendication 13, **caractérisée en ce que** la partie de surface incurvée possède le même rayon de courbure (R3) que celui de la surface radialement extérieure (28) dudit évidement (20) sur ladite zone distale par rapport audit orifice (16).

15. Jante (1) selon l'une quelconque des revendications précédentes, **caractérisée en ce que** ladite jante (1) est une jante pour une roue sans chambre.

16. Jante (1) selon l'une quelconque des revendications précédentes, **caractérisée en ce que** ladite jante (1) est fabriquée en matériau métallique.

17. Jante (1) selon l'une quelconque des revendications 1 à 15, **caractérisée en ce que** ladite jante (1) est fabriquée en matériau composite structurel.

18. Roue de bicyclette comprenant une jante (1) selon l'une quelconque des revendications précédentes.

19. Bicyclette comprenant une roue selon la revendication 18.
